# EUROPÄISCHE PATENTSCHRIFT

(11) **EP 3 312 569 B1**
(45) Veröffentlichungstag und Bekanntmachung des Hinweises auf die Patenterteilung: **08.03.2023**
(21) Anmeldenummer: 17001723.0
(22) Anmeldetag: 19.10.2017
(51) Int. Cl.: G01F 1/76, G01F 1/24, G01F 15/02

(54) **VORRICHTUNG ZUR BESTIMMUNG EINER MOMENTANEN DURCHFLUSSRATE EINES FLIESSFÄHIGEN MEDIUMS UND VERFAHREN ZUR VERWENDUNG EINER SOLCHEN VORRICHTUNG**
DEVICE FOR DETERMINING A FLOW RATE OF A FLOWABLE MEDIUM AND METHOD FOR USE OF SUCH A DEVICE
DISPOSITIF DE DÉTERMINATION D'UN DÉBIT D'UN MILIEU FLUIDE ET PROCÉDÉ D'UTILISATION D'UN TEL DISPOSITIF

(30) Priorität: 19.10.2016 DE 102016012498
(43) Veröffentlichungstag der Anmeldung: 25.04.2018
(73) Patentinhaber: MFT MEISTER FLOW TECHNOLOGY HOLDING GMBH & CO. KG, 63831 Wiesen (DE)
(72) Erfinder: BIRKMANN, Bernhard, 63831 Wiesen (DE)
(74) Vertreter: Nitz, Astrid

(56) Entgegenhaltungen:
- WO-A1-83/00220
- DE-A1- 3 344 757
- DE-A1- 3 433 741
- US-A- 4 250 745
- US-A1- 2014 157 886
- US-B1- 8 262 583

## Beschreibung

Die Erfindung betrifft eine Vorrichtung zur Bestimmung einer momentanen Durchflussrate eines fließfähigen Mediums nach dem Oberbegriff von Anspruch 1 und ein Verfahren nach dem Oberbegriff von Anspruch 5.

Die bekannten Strömungswächter des Stands der Technik arbeiten mit unterschiedlichen fluiden Medien und sind komplex aufgebaut.

DE 34 33 741 A1 zeigt ein Schwebekörper-Durchflussmessgerät für heiße Medien.

US 2014/ 0157886 A1 zeigt eine Vorrichtung zur Bestimmung des Flusses eine Fließmediums. DE 33 44 757 A1 zeigt ein Universalschebekörperdurchlfussmesseinrichtung. WO 83/00220 zeigt eine Messvorrichtung mit einem Hallsensor.

Nachteilig ist es, dass Messungenauigkeiten der Ausgangswerte bereits durch normale Schwankungen der Mediumsparameter auftreten können, insbesondere aber bei extremeren Umweltbedingungen, insbesondere Temperaturunterschieden, oder grenzwertiger Druckbelastung.

Aufgabe der vorliegenden Erfindung ist es, eine Vorrichtung zur Bestimmung einer momentanen Durchflussrate eines fließfähigen Mediums bereitzustellen, die eine einfache und zuverlässige Messung einer Durchflussrate ermöglicht.

Die Aufgabe wird gelöst durch eine Vorrichtung gemäß Anspruch 1 ausgeführt zur Bestimmung einer momentanen Massendurchflussrate eines fließfähigen fluiden Mediums, nämlich eines Gases und/oder einer viskosen Flüssigkeit, eines Schwebekörperdurchflussmessers, umfassend ein Mittel zur Bestimmung und/oder zum Einlesen von Eingangswerten, welche Eingabewerte umfassen: eine Materialangabe des fließfähigen fluiden Mediums, Temperatur und Druck des fließfähigen fluiden Mediums sowie in Form eines Ausgangssignals des Schwebekörperdurchflussmessers ein Hubwert eines Schwebekörpers des Schwebekörperdurchflussmessers, wobei der Schwebekörper von einer Messströmung des fließfähigen fluiden Mediums um den Hubwert anzuheben ist, ein Mittel zur Verarbeitung der Eingangswerte Temperatur und Druck in einer Recheneinheit, wobei mittels eines Korrekturmittels für das fließfähige fluide Medium und der Eingangswerte die momentane Massendurchflussrate zu ermitteln ist, ein Mittel zur Ausgabe eines Ergebniswertes für die momentane Massendurchflussrate, wobei die Eingangswerte als analoge und/oder digitale Signale von Sensoren eingebbar sind, welche Sensoren als Sensormittel integriert in das Mittel zur Bestimmung der Eingangswerte, wobei bei Bestimmung der momentanen Massendurchflussrate des fließfähigen fluiden Mediums das Korrekturmittel einen Korrekturfaktor für Gase, unter Berücksichtigung von Temperatur und Druck umfasst, nämlich eine Dichtekorrektur in Abhängigkeit von Druck und Temperatur des Gases, nämlich Korrekturfaktoren für die Druckabhängigkeit und Temperaturabhängigkeit, wobei die Eingangswerte in Ergebniswerte unter Berücksichtigung der Korrekturfaktoren und/oder Kompensationsparameterkalibrierungstabelle umzuwandeln sind, wobei eine drahtlose Kommunikation, insbesondere über WLAN, mit dem Schwebekörperdurchflussmesser zur Übermittlung von Eingangswerten und Ergebniswerten und Korrekturfaktoren und/oder einer Kompensationsparameterkalibrierungstabelle vorgesehen ist.

Durch die erfindungsgemäße Vorrichtung wird auf einfache Weise mit einem kompakten Aufbau eine Ermittlung der auf die reellen Eigenschaften des fluiden Mediums, insbesondere Druck und Temperaturabhängigkeit der Viskosität, abgestimmte Durchflussrate möglich. Auch eine Ausgabe der Viskosität, Temperatur und Druck als weitere Ausgangsgrößen ist möglich. Die Vorrichtung kann einfach modular aufgebaut werden, so dass eine große Flexibilität zur Anwendung in Durchflussmessern gegeben ist, besonders vorteilhaft an einem Schwebekörperdurchflussmesser.

Erfindungsgemäß ist eine Integration in einen Schwebekörperdurchflussmesser vorgesehen, wobei als Eingangswert ein Ausgangssignal, insbesondere der Hubwert, des Schwebekörperdurchflussmessers vorgesehen Ist.

Erfindungsgemäß ist eine drahtlose Kommunikation, insbesondere über WLAN, der mit einem Durchflussmesser, insbesondere Schwebekörperdurchflussmesser, zur Übermittlung von Eingangswerten und/oder Ergebniswerten und/oder Korrekturfakto-ren und/oder einer Kompensationsparameterkalibrierungstabelle vorgesehen.

Die Übermittlung der Werte von und/oder an den Empfänger dar zu messenden Werte ermöglicht eine Korrektur der Werte im Sinne einer einfach handhabbaren Ermittlung von kalibrierten und/oder temperatur-/und druckkorrigierten Werten, ohne dass eine zusätzlicher Abgleich mit einem externen Messgerät stattfinden müsste und zudem ist eine gerätespezifische Korrektur einfach vorzunehmen. Die Korrekturwerte und Tabellen in der Recheneinheit können zudem durch Wlan-übermittelte Updates schnell und einfach überarbeitet werden.

Vorteilhaft ist es, wenn die Eingangswerte als analoge und/oder digitale Signale von Sensoren, insbesondere mit Strömen zwischen etwa 4 bis etwa 20 mA und/oder Spannungen zwischen etwa 0 bis etwa 10 V eingebbar sind.

Vorteilhaft ist es, wenn ein Ausgabemittel für den Ergebniswert vorgesehen ist, insbesondere ein gesondertes Display. Die Verbindung kann vorteilhaft durch ein Funksignal, insbesondere WLAN vorgenommen werden.

Die Aufgabe wird ebenfalls gelöst durch ein Verfahren gemäß Anspruch 5 zur Verwendung einer Vornchtung zur Bestimmung einer momentanen Massendurchflussrate eines fließfähigen fluiden Mediums, insbesondere eines Gases und/oder einer viskosen Flüssigkeit, eines Durchflussmessers, wobei durch ein Mittel zur Bestimmung und/oder zum Einlesen von Eingangswerten Eingangswerte eingelesen werden, insbesondere Temperatur und/oder Temperatur und Druck und/oder ein Ausgangssignal eines Durchflussmessers, insbesondere ein Hubwert eines Schwebekörpers des Schwebekörperdurchflussmessers, wobei der Schwebekörper von einer Messströmung des fließfähigen fluiden Mediums um den Hubwert angehoben wird, wobei anschließend durch ein Mittel zur Verarbeitung des Eingangswertes oder mehrerer Eingangswerte in einer Recheneinheit die Eingangswerte verarbeitet werden, wobei mittels eines Korrekturmittels für das fließfähige fluide Medium und der Eingangswerte die momentane Massendurchflussrate ermittelt wird und anschließend durch ein Mittel zur Ausgabe eines Ergebniswertes die momentane Massendurchflussrate ausgegeben wird.

Weitere Merkmale und Vorteile der Erfindung ergeben sich aus den Ansprüchen und der nachstehenden Beschreibung, in der Ausführungsbeispiele des Gegenstands der Erfindung in Verbindung mit den Zeichnungen näher erläutert sind

Es zeigen:
- Fig. 1: eine erfindungsgemäße Vorrichtung in schematischer Darstellung,
- Fig. 2: eine erfindungsgemäße Vorrichtung in schematischer Darstellung und
- Fig. 3: eine Hubwertabhängigkeit.

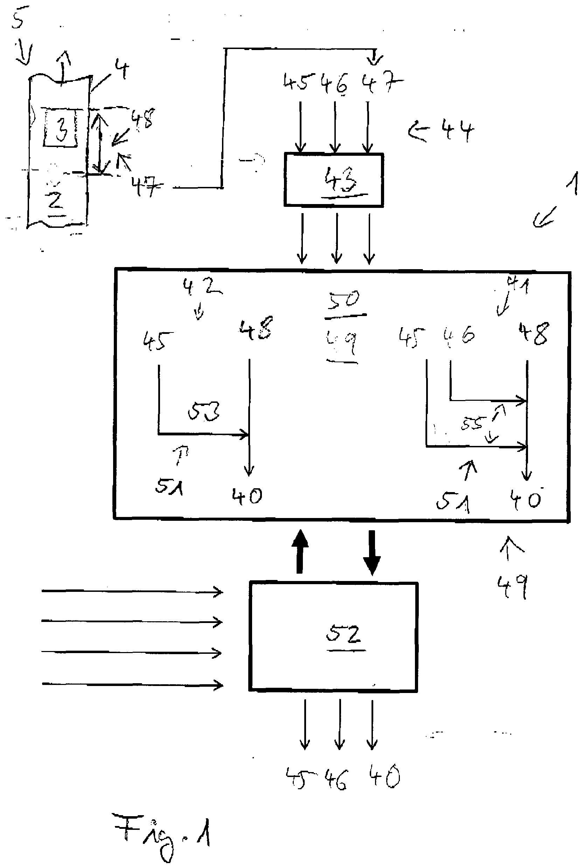

Fig. 1 zeigt eine erfindungsgemäße Vorrichtung 1 in schematischer Darstellung zur Bestimmung einer momentanen Massendurchflussrate 40 eines fließfähigen fluiden Mediums 2, insbesondere eines Gases 41 und/oder einer viskosen Flüssigkeit 42, eines Durchflussmessers, insbesondere eines Schwebekörperdurchflussmessers 5, umfassend ein Mittel 43 zur Bestimmung und/oder zum Einlesen von Eingangswerten 44, insbesondere Temperatur 45 und/oder Temperatur 45 und Druck 46 und/oder ein Ausgangssignal 47 eines Durchflussmessers, insbesondere ein Hubwert 48 eines Schwebekörpers 3 des Schwebekörperdurchflussmessers 5, wobei der Schwebekörper 3 von einer Messströmung des fließfähigen fluiden Mediums 2 um den Hubwert 48 anzuheben ist, ein Mittel 49 zur Verarbeitung des Eingangswertes 44 oder mehrerer Eingangswerte in einer Recheneinheit 50, wobei mittels eines Korrekturmittels 51 für das fließfähige fluide Medium 2 und der Eingangswerte 44 die momentane Massendurchflussrate 40 zu ermitteln ist, ein Mittel 52 zur Ausgabe eines Ergebniswertes 54 für die momentane Massendurchflussrate 40, wobei das Korrekturmittel 51 einen Korrekturfaktor 55 für Gase 41 unter Berücksichtigung von Temperatur 45 und Druck 46 umfasst, insbesondere eine Dichtekorrektur in Abhängigkeit von Druck 46 und Temperatur 46 des Gases 41, insbesondere Korrekturfaktoren 55 für die Druckabhängigkeit Kp 56 und/oder Temperaturabhängigkeit K_{T} 57, wobei durch die Korrekturfaktoren die Eingangswerte 44 in Kalibrierungsparameter umzuwandeln sind.

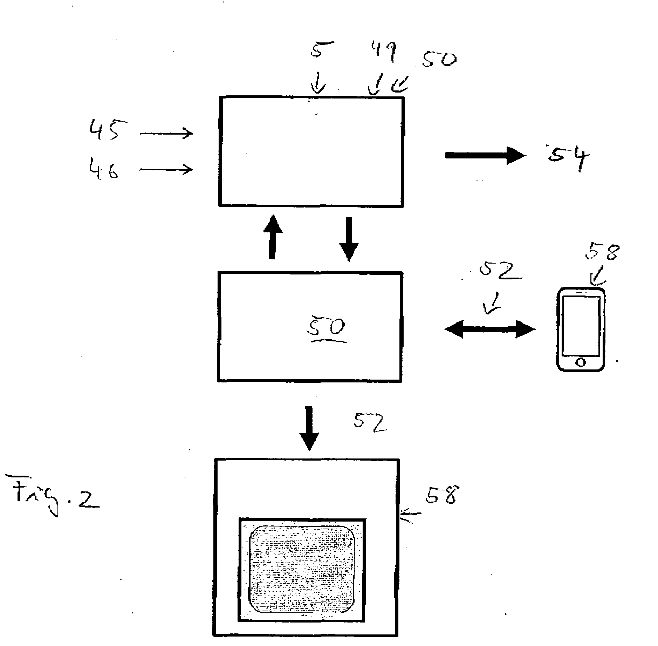

Fig. 2 zeigt eine erfindungsgemäße Vorrichtung 1 in schematischer Darstellung, wobei ein Schwebekörperdurchflussmesser 5 integriert sein kann. Als Ausgabemittel sind Displays oder Smartphones mit entsprechenden Programmen vorteilhaft nutzbar.

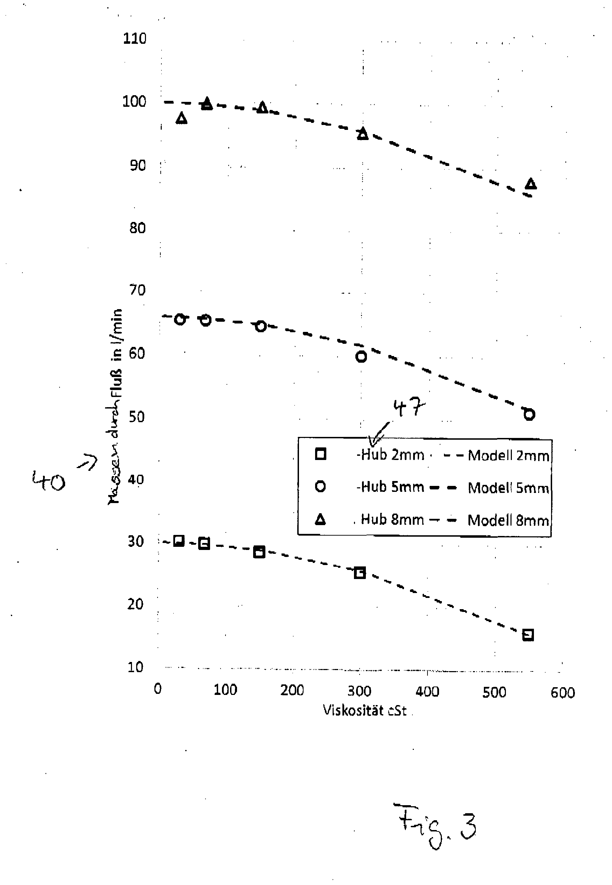

Fig. 3 zeigt eine Hubwertabhängigkeit eines Schwebekörperdurchflussmessers, wobei der Hubwert 48 als Parameter über der Viskosität, die wiederum von T und p abhängig ist, aufgetragen Ist und eine Ermittlung des momentanen Massendurchflusses 40 ermöglicht.

### BEZUGSZEICHENLISTE

- 1: Vorrichtung
- 2: fließfähiges Medium
- 3: Schwebekörper
- 4: Messgehäuseabschnitt
- 5: Schwebekörperdurchflussmesser
- 40: Massendurchflussrate
- 41: Gas
- 42: viskose Flüssigkeit
- 43: Mittel zur Bestimmung und/oder zum Einlesen
- 44: Eingangswert
- 45: Temperatur
- 46: Druck
- 47: Ausgangssignal eines Durchflussmessers
- 48: Hubwert
- 49: Mittel zur Verarbeitung des Eingangswerts
- 50: Recheneinheit
- 51: Korrekturmittel
- 52: Mittel zur Ausgabe
- 53: Kompensationsparameterkalibrierungstabelle
- 54: Ergebniswert
- 55: Korrekturfaktor
- 56: Korrekturfaktor für Druck
- 57: Korrekturfaktor für Temperatur
- 58: Anzeigemittel

## Patentansprüche

1. Vorrichtung (1) ausgeführt zur Bestimmung einer momentanen Massendurchflussrate (40) eines fließfähigen fluiden Mediums (2), nämlich eines Gases (41) und/oder einer viskosen Flüssigkeit (42), eines Schwebekörperdurchflussmessers (5), umfassend ein Mittel (43) zur Bestimmung und/oder zum Einlesen von Eingangswerten (44), welche Eingabewerte umfassen: eine Materialangabe des fließfähigen fluiden Mediums, Temperatur (45) und Druck (46) des fließfähigen fluiden Mediums sowie in Form eines Ausgangssignals (47) des Schwebekörperdurchflussmessers (5) ein Hubwert (48) eines Schwebekörpers (3), wobei der Schwebekörper (3) von einer Messströmung des fließfähigen fluiden Mediums (2) um den Hubwert (48) anzuheben ist, ein Mittel (49) zur Verarbeitung der Eingangswerte Temperatur und Druck in einer Recheneinheit (50), wobei mittels eines Korrekturmittels (51) für das fließfähige fluide Medium (2) und der Eingangswerte (44) die momentane Massendurchflussrate (40) zu ermitteln ist, ein Mittel (52) zur Ausgabe eines Ergebniswertes (54) für die momentane Massendurchflussrate (40), wobei die Eingangswerte (44) als analoge und/oder digitale Signale von Sensoren eingebbar sind, welche Sensoren als Sensormittel integriert in das Mittel zur Bestimmung der Eingangswerte, wobei bei Bestimmung der momentanen Massendurchflussrate des fließfähigen fluiden Mediums (2) das Korrekturmittel (51) einen Korrekturfaktor (55) für Gase, unter Berücksichtigung von Temperatur (45) und Druck (46) umfasst, nämlich eine Dichtekorrektur in Abhängigkeit von Druck (45) und Temperatur (46) des Gases (41), nämlich Korrekturfaktoren (55) für die Druckabhängigkeit (56) und Temperaturabhängigkeit (57), wobei die Eingangswerte (44) in Ergebniswerte unter Berücksichtigung der Korrekturfaktoren und/oder Kompensationsparameterkalibrierungstabelle (54) umzuwandeln sind, wobei eine drahtlose Kommunikation, insbesondere über WLAN, mit dem Schwebekörperdurchflussmesser (5) zur Übermittlung von Eingangswerten (44) und Ergebniswerten (54) und Korrekturfaktoren (55, 56, 57) und/oder einer Kompensationsparameterkalibrierungstabelle (53) vorgesehen ist.

2. Vorrichtung nach Anspruch 1, **dadurch gekennzeichnet, dass** der Schwebekörperdurchflussmesser (5) einen Messgehäuseabschnitt zur Aufnahme von Messmitteln umfasst, mit einem Messleitungsabschnitt (4), durch den das fließfähige Medium (2) hindurch strömen kann, wodurch ein Schwebekörper (3), der mit zumindest einem Messabschnitt in das fließfähige Medium (2) hineinragt, um einen Hubwert (48) anhebbar ist, wobei der Schwebekörper (3) insbesondere mit einem Führungsabschnitt verbunden ist, der in den Messgehäuseabschnitt (4) hineinragt, wobei eine Bestimmung eines Hubwertes (48) insbesondere derart vorzunehmen ist, dass in einem Haltebereich, insbesondere Endbereich, des Führungsabschnitts ein Signalmittel, insbesondere ein Magnetmittel, angeordnet ist, wobei benachbart zu dem Signalmittel, insbesondere Magnetmittel, an dem Haltebereich des Führungsabschnitts des Schwebekörpers (3) ein insbesondere höhenverstellbarer Positionssensor für die Registrierung der Bewegung des Signalmittels, insbesondere Magnetmittels, angeordnet ist, woraus ein Hubwert (48) zu bestimmen ist.

3. Vorrichtung nach einem der Ansprüche 1 bis 2, **dadurch gekennzeichnet, dass** ein Korrekturmittel (50) vorgesehen ist, das einen Korrekturfaktor (55) für viskose Flüssigkeiten (42) ermittelt, unter Berücksichtigung einer insbesondere in der Recheneinheit (50) hinterlegten Kompensationsparameterkalibrierungstabelle (53) für viskose Flüssigkeiten (42), insbesondere einer Viskositäts-Temperatur-Abhängigkeit, insbesondere mit einem Parameter des Hubwerts, der viskosen Flüssigkeit (42), woraus eine kalibrierte Massendurchflussrate zu ermitteln ist.

4. Vorrichtung nach einem der Ansprüche 1 bis 3, **dadurch gekennzeichnet, dass** durch das Mittel (52) zur Ausgabe eines Ergebniswertes (54) für die momentane Massendurchflussrate (40) der Ergebniswert (54) in SPS-konformen Signalen ausgebbar ist.

5. Verfahren zur Verwendung einer Vorrichtung (1) zur Bestimmung einer momentanen Massendurchflussrate (40) eines fließfähigen fluiden Mediums (2), insbesondere eines Gases (41) und/oder einer viskosen Flüssigkeit (42), eines Durchflussmessers, nach einem der Ansprüche 1 bis 4, wobei durch ein Mittel (43) zur Bestimmung und/oder zum Einlesen von Eingangswerten (44) Eingangswerte (44) eingelesen werden, insbesondere Temperatur (45) und/oder Temperatur (45) und Druck (46) und/oder ein Ausgangssignal (47) eines Durchflussmessers (5), insbesondere ein Hubwert (48) eines Schwebekörpers (3) des Schwebekörperdurchflussmessers (5), wobei der Schwebekörper (3) von einer Messströmung des fließfähigen fluiden Mediums (2) um den Hubwert (48) angehoben wird, wobei anschließend durch ein Mittel (49) zur Verarbeitung des Eingangswertes (44) oder mehrerer Eingangswerte in einer Recheneinheit (50) die Eingangswerte (44) verarbeitet werden, wobei mittels eines Korrekturmittels (51) für das fließfähige fluide Medium (2) und der Eingangswerte (44) die momentane Massendurchflussrate (40) ermittelt wird und anschließend durch ein Mittel (52) zur Ausgabe eines Ergebniswertes (54) die momentane Massendurchflussrate (40) ausgegeben wird.

## Claims

1. Apparatus (1) designed for determining an instantaneous mass flow rate (40) of a fluidized medium (2), namely a gas (41) and/or a viscous liquid (42), a float flowmeter (5), comprising a means (43) for determining and/or reading input values (44), comprising input values: an indication of the material of the fluidized medium, temperature (45) and pressure (46) of the fluidized medium and, in the form of an output signal (47) of the float flowmeters (5) a stroke value (48) of a float (3), whereby the float (3) is raised by the stroke value (48) from a measuring flow of the flowing fluid medium (2) by the stroke value (48), a means (49) for processing the input values of temperature and pressure in a unit of calculation (50), whereby the instantaneous mass flow rate (40) is determined by means of a corrector (51) for the flowing fluid medium (2) and the input values (44), a means (52) for the output of a result value (54) for the instantaneous mass flow rate (40), whereby the Input values (44) can be input as analogue and/or digital signals from sensors, which sensors as sensor means are integrated into the means for determining the input values whereby, when determining the instantaneous mass flow rate of the flowing fluid medium (2), the correction means (51) comprises a correction factor (55) for gases, taking into account temperature (45) and pressure (46), namely a density correction as a function of pressure (45) and temperature (46) of the gas (41), namely correction factors (55) for pressure dependence (56) and temperature dependence 7), whereby the input values (44) are to be converted into result values taking into account the correction factors and/or compensation parameter calibration table (54), whereby wireless communication, in particular via WLAN, is provided with the float flowmeter (5) for the transmission of input values (44) and result values (54) and correction factors (55, 56, 57) and/or a compensation parameter calibration table (53).

2. Apparatus as claimed in claim 1, **characterised in that** the float flowmeter (5) comprises a measuring housing section for receiving measuring means, with a measuring line section (4) through which the flowable medium (2) can flow, whereby a float (3) projecting into the flowable medium (2) with at least one measuring section can be raised by a stroke value (48), the float (3) being connected in particular to a guide section projecting into the measuring housing section (4), whereby a float (3) In particular, a lift value (48) is to be determined in such a way that in a holding area, in particular the end area, of the guide section a signalling means, in particular a magnetic means, is arranged adjacent to the signalling means, in particular magnetic means, in the holding area of the guide section of the suspended body (3) a position sensor, in particular adjustable in height, is arranged for recording the movement of the signalling means, in particular magnetic means, from which a lift value (48) is to be determined.

3. Apparatus as claimed in any one of claims 1 to 2, **characterised in that** a corrective means (50) is provided which determines a correction factor (55) for viscous liquids (42) taking into account a compensation parameter calibration table (53) for viscous liquids (42) stored in particular in the computing unit (50), in particular a viscosity-temperature dependence, in particular a parameter of the stroke value, of the viscous liquid (42), from which a calibrated mass flow rate is to be determined.

4. Apparatus according to any one of claims 1 to 3, **characterised in that** by means (52) for output of a result value (54) for the instantaneous mass flow rate (40), the result value (54) is output in PLC-compliant signals,

5. Method for using a device (1) for determining a instantaneous mass flow rate (40) of a flowing fluid medium (2), in particular of a gas (41) and/or a viscous liquid (42), a flowmeter, according to any one of claims 1 to 4, wherein by means (43) for determining and/or reading input values (44) input values (44), in particular temperature (45) and/or temperature (45) and pressure (46) and/or an output signal (47) of a flowmeter (5), in particular a stroke value (48) of a float (3) of the float flowmeter (5), in which the float (3) is raised by the stroke value (48) by a flow rate of the flowing fluid medium (2) and the input values (44) are then processed by a means (49) for processing the input value (44) or several Input values in a unit of calculation (50), whereby the instantaneous mass flow rate (40) is determined by a means (51) for the flowing fluid medium (2) and the input values (44) and then by a means (52) Output of a result value (54) the instantaneous mass flow rate (40) is output.

## Revendications

1. Dispositif (1) conçu pour la détermination d'un débit massique instantané (40) d'un fluide (2), à savoir un gaz (41) et/ou un liquide visqueux (42), un débitmètre à corps flottant (5), comprenant un moyen (43) de détermination et/ou de lecture des valeurs d'entrée (44), comprenant: une indication du matériau du fluide flottant, la température (45) et la pression (46) du fluide flottant et sous forme d'un signal de sortie (4.7) du corps flottant Débitmètres (5) une valeur cylindrique (48) d'un corps en suspension (3), dans laquelle le corps en suspension (3) doit être porté à partir d'un débit mesuré du fluide (40), où les valeurs d'entrée (44) peuvent être saisies sous forme de signaux analogiques et/ou numériques à partir de capteurs qui intègrent les capteurs en tant que moyen de détection dans le moyen de détermination des valeurs d'entrée où, pour la détermination du débit massique instantané du fluide (2), l'agent de correction (51) comprend un facteur de correction (55) pour les gaz, compte tenu de la température (45) et de la pression (46), à savoir une correction de la densité en fonction de la pression (45) et de la température (46) du gaz (41), à savoir des facteurs de correction (55) pour la dépendance de la pression. (56) et la dépendance à la température (57), où les valeurs d'entrée (44) doivent être converties en valeurs de résultat en tenant compte des facteurs de correction et/ou du tableau d'étalonnage des paramètres de compensation (54), en prévoyant une communication sans fil, notamment par Wi-Fi, avec le débitmètre à corps suspendu (5) pour transmettre les valeurs d'entrée (44) et les valeurs de résultat (54) et les facteurs de correction (55, 56, 57) et/ou un tableau d'étalonnage des paramètres de compensation (53).

2. Dispositif selon la revendication 1, **caractérisé par le fait que** le débitmètre à corps flottant (5) comporte une section de boîtier destinée à recevoir les moyens de mesure, avec une section de conduite de mesure (4) à travers laquelle le fluide (2) peut s'écouler, de sorte qu'un corps flottant (3) qui pénètre dans le fluide (2) avec au moins une section de mesure peut être soulevé d'une valeur (48), le corps flottant (3) étant notamment relié à une section de guidage qui se trouve dans la section de boîtier (4) h La détermination d'une valeur de moyeu (48) doit notamment être effectuée de telle manière que, dans une plage d'arrêt, notamment la plage d'extrémité, de la section de guidage, soit disposé un moyen de signalisation, notamment un moyen magnétique, et que, à proximité du moyen de signalisation, notamment magnétique, sur la plage d'arrêt de la section de guidage du corps suspendu (3), un capteur de position particulièrement réglable en hauteur pour enregistrer le mouvement du moyen de signalisation, notamment magnétique, soit disposé à proximité du moyen de signalisation, et à partir duquel une valeur de moyeu (48) doit être déterminée.

3. Dispositif selon l'une des revendications 1 à 2, **caractérisé par** la présence d'un agent correcteur (50) qui détermine un facteur de correction (55) pour les liquides visqueux (42), en tenant compte d'un tableau d'étalonnage des paramètres de compensation (53) pour les liquides visqueux (42), déposé spécialement dans l'unité de calcul (50), en particulier d'une dépendance viscosité-température, notamment avec un paramètre de la valeur de levage, le liquide visqueux (42), d'où un débit massique étalonné à moyens est.

4. Dispositif conforme à l'une des revendications 1 à 3, **caractérisé par** le moyen (52) permettant d'émettre une valeur résultante (54) pour le débit massique instantané (40), la valeur résultante (54) peut être émise dans des signaux conformes à la norme SPS.

5. Procédure d'utilisation d'un dispositif (1) pour déterminer le débit massique instantané (40) d'un fluide (2), en particulier d'un gaz (41) et/ou d'un liquide visqueux (42), d'un débitmètre, selon l'une des revendications 1 à 4, en utilisant un moyen (43) pour déterminer et/ou lire les valeurs d'entrée (44) les valeurs d'entrée (44), en particulier la température (45) et/ou la température (45) et/ou la pression (46) et/ou un signal de sortie (47) d'un débitmètre (5), en particulier une valeur d'élasticité (4). d'un corps flottant (3) du débitmètre à corps flottant (5), dans lequel le corps flottant (3) est augmenté de la valeur de cisaillement (48) à partir d'un débit de mesure du fluide (2) et à l'aide d'un moyen (49) de traitement de la valeur d'entrée (44) ou de plusieurs valeurs d'entrée dans une unité de calcul (50), les valeurs d'entrée (44) sont traitées et le débit massique instantané (40) est déterminé à l'aide d'un moyen correcteur (51) pour le fluide un moyen (52) pour obtenir une valeur de résultat (54) donne le débit massique instantané (40).
